(19) Europäisches Patentamt
European Patent Office
Office européen des brevets

(11) EP 4 186 763 A1

(12) EUROPEAN PATENT APPLICATION

(43) Date of publication:
31.05.2023 Bulletin 2023/22

(21) Application number: 22210145.3

(22) Date of filing: 29.11.2022

(51) International Patent Classification (IPC):
B60T 17/22 (2006.01)   F16D 55/36 (2006.01)
G01K 11/26 (2006.01)   F16D 66/00 (2006.01)

(52) Cooperative Patent Classification (CPC):
B60T 17/22; F16D 55/36; G01K 11/265;
F16D 2066/001

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.11.2021 US 202163284219 P

(71) Applicants:
• Airbus Operations Limited
Bristol BS34 7PA (GB)
• Airbus Opérations SAS
31060 Toulouse (FR)

(72) Inventors:
• DA CUNHA, Mauricio Pereira
Orono, 04473 (US)
• LAD, Robert.J.
Orono, 04473 (US)
• WHITE, Ian
Bristol, BS34 7PA (GB)
• BRUGGEMANN, Kurt
Bristol, BS34 7PA (GB)
• DOWNING, Richard
Bristol, BS34 7PA (GB)
• CONSOLA, Maud
Bristol, BS34 7PA (GB)

(74) Representative: EIP
Fairfax House
15 Fulwood Place
London WC1V 6HU (GB)

(54) WHEEL BRAKE AND TEMPERATURE SENSING DEVICE

(57)    Disclosed is a brake disc (202) for an aircraft wheel brake (200) comprising a temperature sensing device (300) comprising a surface acoustic wave (SAW) sensor element (302) and a sensor antenna (304), wherein the temperature sensing device (300) is attached to the brake disc (202) by means of a ceramic adhesive (602) and one or more ceramic bolts (604). A method (900) of attaching a temperature sensing device (300) to a brake disc (202) of an aircraft wheel brake (200) is also disclosed.

Figure 2

EP 4 186 763 A1

(Cont. next page)

Figure 6

**Description**

TECHNICAL FIELD

The present invention relates to sensing aircraft wheel brake temperature. More specifically, the present invention relates to a brake disc and a temperature sensing device.

BACKGROUND

When aircraft wheel brakes are applied to reduce the speed of an aircraft, the temperature of the aircraft wheel brakes rises. It can be advantageous to monitor the temperature of the aircraft wheel brakes to, for example, ensure that the brakes do not overheat. For example, temperature sensors such as thermocouples can be used to sense temperature.

SUMMARY

A first aspect of the present invention provides a brake disc for an aircraft wheel brake comprising: a temperature sensing device comprising a surface acoustic wave (SAW) sensor element and a sensor antenna, wherein: the temperature sensing device is attached to the brake disc by means of a ceramic adhesive and one or more ceramic bolts.

Optionally, the brake disc comprises: respective one or more threaded holes for receiving the one or more ceramic bolts.

Optionally, the one or more ceramic bolts are wet installed into the one or more threaded holes.

Optionally, the one or more ceramic bolts are wet installed using the ceramic adhesive.

Optionally, the temperature sensing device is attached to the brake disc by means of the ceramic adhesive and two ceramic bolts.

Optionally, the temperature sensing device comprises one or more through holes for receiving the one or more ceramic bolts.

According to a second aspect of the present invention, there is provided a method of attaching a temperature sensing device comprising a surface acoustic wave (SAW) sensor element and a sensor antenna, to a brake disc of an aircraft wheel brake, the method comprising: adhering the temperature sensing device to the brake disc using ceramic adhesive; and attaching the temperature sensing device to the brake disc using one or more ceramic bolts.

Optionally, in the method according to the second aspect, attaching the temperature sensing device to the brake disc using one or more ceramic bolts comprises: wet installation of the one or more ceramic bolts.

Optionally, in the method according to the second aspect, the one or more ceramic bolts are wet installed using the ceramic adhesive.

Optionally, the method according to the second aspect comprises attaching the temperature sensing device to the brake disc using two ceramic bolts.

According to a third aspect of the present invention, there is provided an aircraft comprising the brake disc according to the first aspect.

BRIEF DESCRIPTION OF THE DRAWINGS

Embodiments of the invention will now be described, by way of example only, with reference to the accompanying drawings, in which:

Figure 1 is a simplified schematic view of an aircraft on which examples may be deployed;

Figure 2 is a simplified schematic view of a brake and a wheel of an aircraft landing gear assembly according to an example;

Figure 3 is a simplified schematic block diagram of a temperature sensing device according to a first example;

Figure 4 is a simplified schematic plan view of a surface acoustic wave sensor element, according to an example;

Figure 5 is a simplified schematic block diagram of a temperature sensing system according to an example;

Figure 6 is a simplified schematic diagram illustrating a part of a brake disc comprising a temperature sensing device, according to an example;

Figure 7 is a schematic plan view of a temperature sensing device attached to a portion of a brake disc, according to an example;

Figure 8 is a simplified schematic perspective view of a temperature sensing device attached to a carbon piece, according to an example; and

Figure 9 is a flow diagram illustrating a method of attaching a temperature sensing device to a brake disc, according to an example;

DETAILED DESCRIPTION

The following disclosure relates to a brake disc for an aircraft wheel brake comprising a temperature sensing device.

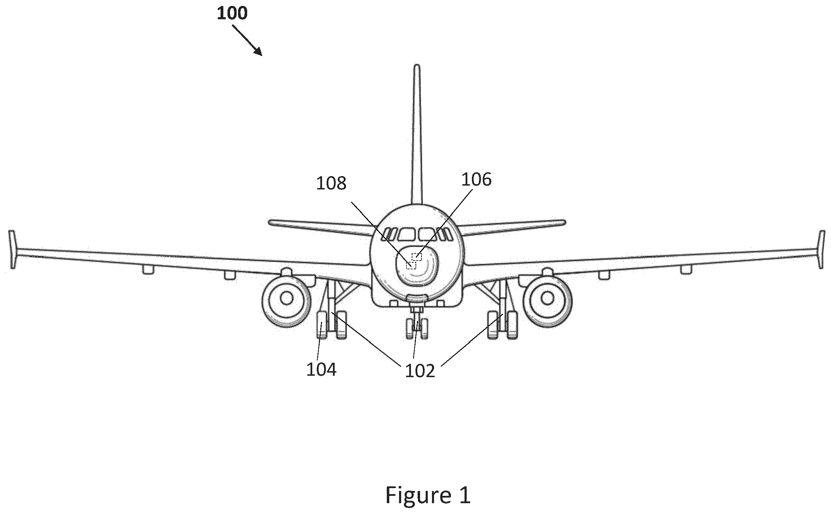

Figure 1 is a simplified schematic view of an aircraft 100. The aircraft 100 comprises a plurality of landing gear assemblies 102. The landing gear assemblies may include main and nose landing gears that are deployed or extended during take-off and landing. Each landing gear assembly 102 includes wheels 104. The aircraft 100 comprises a computing system 106, which, for example, comprises one or more processors and one or more computer readable storage media. The aircraft 100 may also comprise instruments 108, such as instruments or sensors for measuring characteristics or parameters related to the aircraft, and instruments or sensors for measuring environmental characteristics.

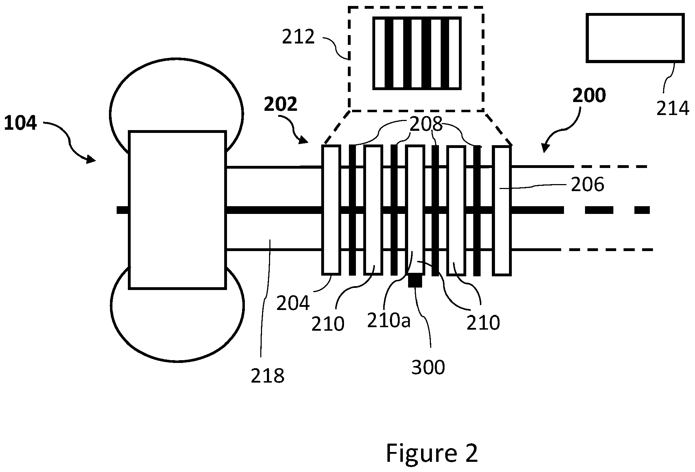

Figure 2 is a simplified schematic view of an aircraft wheel brake 200 associated with the wheel 104 of the aircraft 100. The wheel brake 200 applies a braking force to inhibit the rotation of the wheel 104 when applied. Each of the wheels of the aircraft 100 may have a wheel brake 200 associated with it. In this example, the wheel brake 200 comprises a plurality of brake discs 202 including a pressure plate 204, a reaction plate 206, and a number of rotors 208 and stators 210. In this example, the brake discs 202 include a plurality of rotors and stators, and the wheel brake 200 is therefore a multiple disc brake. In other examples, the wheel brake 200 may not be a multiple-disc brake: there may be only one disc 208, for example, between a pressure plate 204 and a reaction plate 206. In some examples, the brake discs 202 may include up to 9 discs or 11 discs, or any other number which is suitable for a wheel brake of an aircraft. The brake discs 202 may collectively be referred to as a heat pack. The components of the wheel brake 200 (hereafter, for brevity, the wheel brake 200 is referred to simply as the brake 200) such as the brake discs 202 may be housed in a wheel brake housing (not shown). As referred to herein, the term brake is used as if to include such a wheel brake housing.

It will be understood that the type of wheel brake used in an aircraft landing gear depends on the characteristics of the aircraft in question, such as size, carrying capacity and the like. The following may be applied to any wheel brakes suitable for use as aircraft wheel brakes which heat up when applied to reduce aircraft speed, as discussed in the following.

When the aircraft 100 travels along the ground supported by the landing gear assembly 102, the rotors rotate with the wheel 104 (the rotors are keyed to the wheel 104), whereas the stators, the pressure plate 204 and the reaction plate 206 do not rotate with the wheel 104 (the stators, the pressure plate 204 and the reaction plate 206 are keyed to a torque tube 218 associated with the wheel 104 which does not rotate with the wheel 104). When braking is applied, the pressure plate 204 is urged towards the reaction plate 206 so that the brake discs 202 come into contact with one another (as shown in box 212 of Figure 2) and friction acts to inhibit the rotational motion of the rotors, thus generating a braking force. When the brake 200 is applied, some of the kinetic energy of the aircraft 100 is absorbed into the brake discs 202 as heat (by the action of friction). Accordingly, the brake 200 heats up when it is applied to cause the aircraft 100 to slow down.

Any one or more of the rotors, stators, pressure plate 204 and the reaction plate 206 may be composed of Carbon-Carbon (CC) composites. A brake including brake discs composed of CC composites may be referred to as a carbon brake. For example, the brake discs 202 may be composed of a graphite matrix reinforced by carbon fibers.

Those skilled in the art will appreciate that the environment of the brake discs 202 may be harsh due to vibration and/or physical shock during application of braking for example. The environment of the brake discs 202 may be harsh due to high temperatures reached by the brake discs 202, for example.

In this example, the aircraft 100 comprises a braking system 214 which controls the operation of the brake 200. The braking system 214 causes the brake 200 to be applied in response to a braking request (for example when a pilot of the aircraft 100 presses a brake pedal). For example, the brake 200 may be hydraulically actuated in which case the braking system 214 includes a hydraulic system (not shown) operationally connected with the brake 200. In other examples, the brake 200 may be electrically actuated in which case the braking system 214 includes an electronic brake actuation system. The braking system 214 may be controlled by the computing system 106.

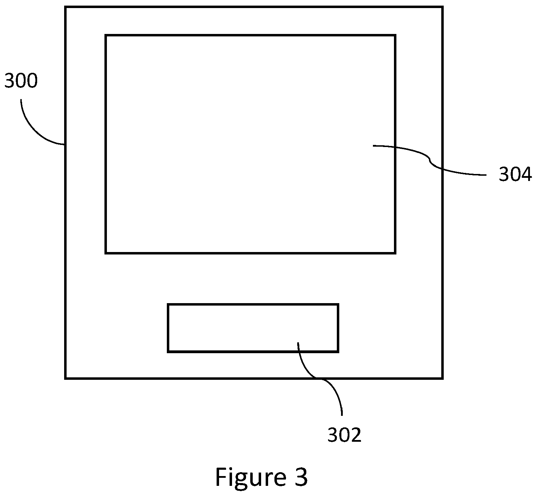

Figure 3 is a simplified schematic view of a temperature sensing device 300. The temperature sensing device 300 is for sensing aircraft wheel brake temperature (for example, the temperature of the brake 200). For example, the temperature sensing device 300 may be attached to a component of the brake in order to sense the temperature of that component of the brake 200. For example, the temperature sensing device 300 may be attached to one of the brake discs 202. In the example of Figure 2, the temperature sensing device 300 is attached to one of the stators. For example, the temperature sensing device 300 is attached to a first stator 210a, as schematically shown.

The temperature sensing device 300 may be attached to the first stator 210a in a manner that can withstand the high temperatures expected to occur at the first stator 210a. For example, the temperature sensing device 300 may be attached to the first stator 210a by means of a ceramic adhesive. Ceramic adhesive may be intended to withstand high temperatures, for example in excess of 1000°C. For example, the ceramic adhesive may be applied between the first stator 210a and the temperature sensing device 300 and cured such that the temperature sensing device 300 is bonded to the first stator 210a using cured ceramic adhesive material (for example, ceramic epoxy adhesive material). In some examples, the first stator 210a comprises a first formation (for example, one or more grooves). The first formation may be formed by cutting, grinding, drilling, or boring the first formation into the material of the first stator 210a. In such examples, a second formation may be formed from the ceramic adhesive to interlock with the first formation. For example, the ceramic adhesive with the second formation may be an attachment element for attaching the temperature sensing device 300 to the first stator 210a. For example, the second formation is complementary to the first formation. For example, the first formation is a groove formed in the first stator 210a and the second formation is a spike which fits into the groove to inhibit movement between the first stator 210a the attachment element along an axial direction and a circumferential direction of the first stator 210a. In some examples, providing the attachment element as described comprises applying uncured ceramic adhesive material to the surface of the first formation to create the second formation.

It will be appreciated that the temperature sensing device 300 may be attached to a brake disc in a number of ways. Alternatively, or in addition to the use of ceramic adhesive, other fasteners such as ceramic bolts may be used to attach the temperature sensing device 300. For example, a ceramic bolt may be passed through a through hole in the temperature sensing device 300 and engage with a threaded hole in the first stator 210a. In some examples, an appropriately shaped clip (for example, a metal clip) may be used as an attachment element. For example, the clip may comprise through holes and may be attached to the first stator 210a using bolts. Those skilled in the art will appreciate the various ways of attaching components to withstand high temperatures.

The temperature sensing device 300 comprises a surface acoustic wave (SAW) sensor element 302. In the example of Figure 3, the temperature sensing device also comprises a sensor antenna 304, which is electrically coupled to the SAW sensor element 302. The temperature sensing device 300 may be a passive device in that it does not require electrical power to operate. It will be understood that the SAW sensor element 302 works based on SAWs generated in the SAW sensor element 302. For example, the SAW sensor element 302 comprises a transducer which converts an input signal (for example, an electrical signal) into a surface acoustic wave that resonates in the SAW sensor element 302. The SAW sensor element 302 also, for example, comprises a transducer to convert the SAW into an output signal (for example, an output signal).

The temperature sensing device 300 may be configured to withstand the harsh environment of the brake discs 202. For example, the temperature sensing device may be configured to withstand at least one of: a saw tooth shock profile of 6g at 20ms duration, a saw tooth shock profile of 55g at 30ms duration, a saw tooth shock profile of 70g at 0.4ms duration, a half-sine shock profile of 40g at 30ms duration, a half-sine shock profile of 50g at 0.5ms duration, and vibration of 50g at 2 kHz for a minimum duration of 3 hours. Vibrations and/ or shock testing may be performed in accordance with Radio Technical Commission for Aeronautics (RTCA) DO-160G.

It will be understood that the SAW sensor element 302 works based on SAWs generated in the SAW sensor element 302. For example, the SAW sensor element 302 comprises a transducer which converts an input signal (for example, an electrical signal) into a surface acoustic wave that resonates in the SAW sensor element 302. The SAW sensor element 302 also, for example, comprises a transducer to convert the SAW into an output signal (for example, an output signal). Physical properties (such as temperature, for example) of the SAW sensor element may be determined based on the output signal.

The input signal may be referred to as an interrogation signal. That is because the interrogation signal causes the output signal based on which, for example, temperature can be determined. The interrogation signal therefore acts to query the SAW sensor element 302 to provide an output signal. The interrogation signal may be wirelessly received by the temperature sensing device 300. The output signal may be wirelessly transmitted by the temperature sensing device 300.

The SAW sensor element 302 comprises one or more interdigital transducers (IDTs). The IDTs are for converting between a SAW and, for example, an electrical signal. The functioning of an IDT is described further below. In some examples, the SAW sensor element 302 is a one-port SAW sensor. In such examples, the SAW sensor element 302 has one IDT. For example, the SAW sensor element 302 may have one IDT and reflectors either side of the IDT to reflect the SAW. In such examples, the one IDT converts an input signal into a SAW and also converts the SAW back into an electrical signal as a response (output) signal.

In some examples, the SAW sensor element 302 is a two-port SAW sensor. In such examples, the SAW sensor element 302 comprises two IDTs spaced apart from one another. There is an input IDT which converts an input signal into a SAW. The SAW travels from the input IDT to an output IDT. The output IDT converts the SAW into an output signal. Those skilled in the art will appreciate the various configurations of a SAW sensor element.

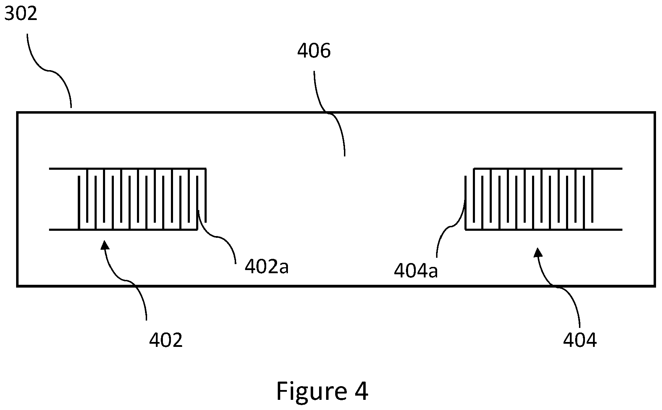

Figure 4 illustrates a particular example of the SAW sensor element 302. In this example, the SAW sensor element 302 is a two-port SAW sensor, and comprises an input IDT 402 and an output IDT 404. Each of the input IDT 420 and the output IDT 404 comprises two interlocking comb-shaped arrays of electrodes, deposited on the surface of a piezoelectric substrate 406 to form a periodic structure. The electrodes may be metallic electrodes, for example. In this example, the input IDT 402 comprises a first periodic electrode structure 402a and the output IDT 404 comprises a second periodic electrode structure 404a. The input IDT 402 is provided at a first location of the piezoelectric substrate 406 and the output IDT 404 is provided at a second location of the piezoelectric substrate 406 such that there is a space between the input IDT 402 and the output IDT 404.

Those skilled in the art will appreciate that a piezoelectric material can generate an electric charge in response to mechanical stress. Furthermore, a piezoelectric material can deform and generate mechanical stress in response to an applied electric field. An alternating electrical signal can be applied to the input IDT 402 such that adjacent electrodes have opposite polarities and the polarity of each electrode alternates according to the applied alternating electrical signal. Such a signal causes there to be a region of compressive stress next to a region of tensile stress, and each region alternates between compressive and tensile stress. As a result of this alternating compressive and tensile stress, there is generated a mechanical wave. This mechanical wave is what is referred to as a surface acoustic wave (SAW), as described above. SAWs in the SAW sensor element 302 are generated at the resonant frequency of the SAW sensor element 302.

In the example of Figure 4, the SAW travels from the input IDT 402 to the output IDT 404. The alternating regions of compressive and tensile stress caused by the SAW at the output IDT cause there to be alternating electric fields. These alternating electric fields generate an electrical signal in the output IDT such that the polarities of adjacent electrodes of the output IDT 404 alternate in the manner described above for the input IDT 402. In other words, an electrical signal is generated at the output IDT 404 by the reverse of the process which took place at the input IDT 402 to generate the SAW from the input electrical signal.

As previously described, the physical properties (such as temperature, for example) of the SAW sensor element may be determined based on the output signal. The characteristics of the SAW in the SAW sensor element 302 depend on the physical properties of the SAW sensor element such as temperature. Therefore, by detecting the characteristics of the SAW, the temperature of the SAW sensor element 302 can be determined. For example, the characteristics of the SAW are detected using the output signal generated by the output IDT 404 in response to an interrogation signal received at the input IDT 402.

Various characteristics of the SAW may be detected. For example, a delay relating to the transmission of the interrogation signal and receipt of the output signal in response from the temperature sensing device 300, a phase shift response of the SAW sensor element 302, and/or a resonant frequency of the SAW sensor element 302 may be detected. For example, the frequency of the output signal corresponds to the frequency of the SAW and therefore the resonant frequency of the SAW sensor element 302. A desired physical property of the SAW sensor element 302 (such as temperature) may then be determined from the detected characteristic of the SAW sensor element 302.

A predefined relationship between the detected characteristic (for example, the resonant frequency) of the SAW sensor element 302 and the temperature of the SAW sensor element 302 may be stored in a computer readable memory (for example, in the computing system 106) on the aircraft 100, for example. The predefined relationship specifies what the detected characteristic of the SAW sensor element 302 is expected to be at various different temperatures (for example, obtained from calibration and/or testing of the SAW sensor element 302). For example, from a given resonant frequency, the temperature of the SAW sensor element 302 is determined from the predefined relationship. The predefined relationship may be stored in the form of a look-up table, rule, correlation equation, graph, etc.

The predefined relationship may be determined by performing calibration or other test on the SAW sensor element 302. For example, test may be performed to cause the SAW sensor element 302 to resonate at different temperatures and determine the resonant frequencies at those temperature in order to establish the predefined relationship.

As previously described, the temperature sensing device 300 is attached to one of the brake discs 202. In the example of Figure 2, the temperature sensing device is attached to one of the stators 210. Therefore, the temperature of the SAW sensor element 302 corresponds to the temperature of the brake disc to which it is attached.

The interrogation signal may be wirelessly received by the temperature sensing device 300. The temperature sensing device 300 may comprise (as in the example of Figure 3) a sensor antenna 304 configured to wirelessly receive the interrogation signal, and supply the interrogation signal to the SAW sensor element 302. For example, the sensor antenna 304 receives the interrogation signal in the form of radio waves and converts the radio waves into an electrical signal. The SAW sensor element may be configured to, responsive to the interrogation signal, output a signal as a response (the described output signal), the output signal indicative of the resonant frequency of the SAW sensor element 302, to the sensor antenna 304. For example, the sensor antenna 304 may be configured to wirelessly transmit the output signal. For example, the sensor antenna 304 converts the electrical output signal into radio waves.

For example, the sensor antenna 304 supplies the interrogation signal to the input IDT 402 of the SAW sensor element 302. The interrogation signal as received at the input IDT 402 is an alternating electrical signal which causes the input IDT 402 to generate a SAW as previously described. The SAW sensor element 302 provides an output signal (generated by the output IDT 404 as previously described). For example, the output signal is supplied from the output IDT 404 to the sensor antenna 304. The sensor antenna 304 transmits the output signal. For example, the sensor antenna 304 is electrically coupled to the input IDT 402 and the output IDT 404. The origin of the interrogation signal and the components which receive and process the output signal are described later.

A change in temperature of the SAW sensor element 302 causes a change in the resonant frequency. For example, as the temperature of the SAW sensor element 302 increases, the resonant frequency of the SAW sensor element decreases. The frequency of the SAW depends on the spacing between the electrodes of the IDTs. The spacing between adjacent electrodes is referred to as the pitch of the IDT in question. The pitch determines the wavelength of the SAW generated by the IDT. The pitch is equal to half of the wavelength of the SAW generated by the IDT. Therefore, the desired frequency resonant frequency of the SAW sensor element

The frequency of the SAW depends on the propagation velocity of the SAW and the wavelength of the SAW according to Equation (1) below.

$$f = \frac{V_s}{\lambda} \qquad\qquad (1)$$

In Equation (1), f represents the frequency of the SAW, $V_s$ represents the propagation velocity of the SAW in the SAW sensor element in question, and $\lambda$ represents the wavelength of the SAW.

The frequency of the SAWs generated in the SAW sensor element 302 can be referred to as the resonant frequency of the SAW sensor element. It will be appreciated that, for a given propagation velocity of the SAW in the SAW sensor element 302, the resonant frequency of the SAW sensor element 302 can be configured by selecting an appropriate pitch for the IDTs of the SAW sensor element 302.

The temperature of the SAW sensor element 302 may be determined by detecting the resonant frequency of the SAW sensor element 302 as indicated by the output signal.

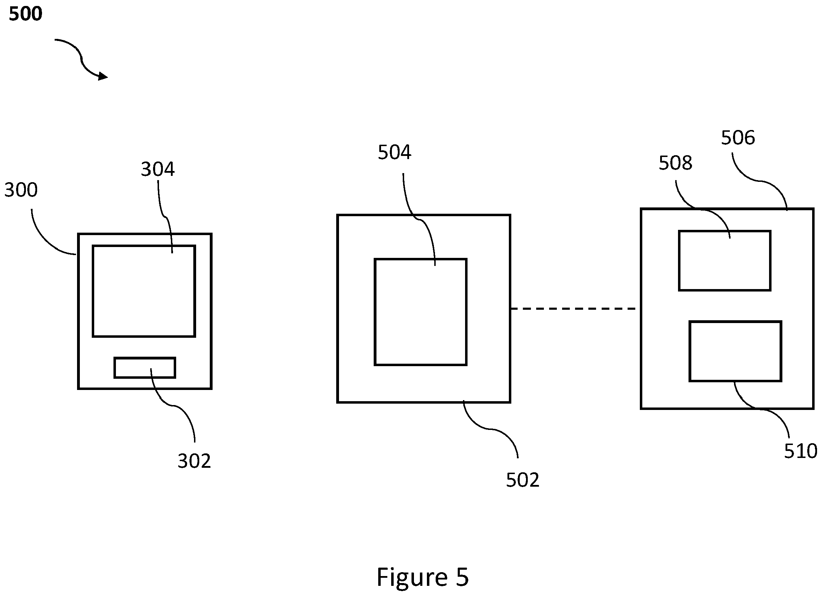

Figure 5 schematically illustrates an example of a temperature sensing system 500 for sensing aircraft wheel brake temperature. The temperature sensing system 500 comprises the temperature sensing device 300 according to any of the described examples. The temperature sensing system 500 also comprises a wireless relay device 502 for delivering the interrogation signal for wirelessly interrogating the SAW sensor element 302. The wireless relay device 502 delivers the interrogation signal by wirelessly transmitting the interrogation signal to the temperature sensing device 300. The wireless relay device 502 also wirelessly receives the described output signal. The wireless relay device 502 is hereafter simply referred to as the relay 502..

In some examples, the relay 502 comprises a relay antenna 504. The relay antenna wirelessly transmits the interrogation signal and wirelessly receives the output signal. In some such examples, the relay 502 is simply a device for communicating wirelessly with the temperature sensing device 300. As described, the temperature sensing device 300 may be attached to one of the brake discs 202. The relay 502 may be attached to a component of the brake 200 or wheel 104 such that it can wirelessly communicate with the temperature sensing device 300 attached to a brake disc. For example, the relay 502 may be mounted so as to maintain line of sight with the temperature sensing device 300.

The wireless communication between the temperature sensing device 300 and the relay 502 can be implemented, for example, by electromagnetic, inductive or capacitive coupling of the relay 502 to the temperature sensing device 300. For example, each of the sensor antenna 304 and the relay antenna 504 may be configured to convert electrical signals to radio waves and vice versa, with the radio waves being transmitted between the respective antennas.

In some examples, the temperature sensing device 300 is attached to the first stator 210a and the relay 502 is attached to the torque tube 218 to which the first stator 210a is keyed. In such examples, the relay 502 is attached to the torque tube at a position so as to be in the line of sight of the temperature sensing device 300 on the first stator 210a. In other examples, the temperature sensing device 300 may be attached to a different brake disc or a different component of the brake 200, and the relay 502 may be attached to an appropriate location to maintain line of sight with the temperature sensing device 300.

The temperature sensing system 500 may comprise an interrogation apparatus 506. The interrogation apparatus 506 may form part of the computing system 106 of the aircraft 100. In such examples, the interrogation apparatus 506 forms a communication link (which may be wireless or wired) with the relay 502. The interrogation apparatus 506 comprises a controller 508 configured to provide the interrogation signal. For example, the controller 508 may provide the interrogation signal based on a command signal received from another component of the computing system 106. The command signal may comprise the interrogation signal, and the interrogation signal may simply be retransmitted towards to the relay 502. In other examples, the command signal may be an instruction for the controller 508 to generate the interrogation signal.

In the example of Figure 5, the interrogation apparatus 506 comprises a transceiver 510 for transmitting the interrogation signal to the relay 502 and receiving the described output signal from the relay 502. The transceiver 510 may communicate with the relay 502 via a wired communication link or wirelessly. For example, for wireless communication, respective antennas may be provided as part of the relay 502 and the interrogation apparatus 506.

The SAW sensor element 302 has a resonant frequency within a frequency range between 175 megahertz (MHz) and 190MHz at a predetermined temperature. A frequency range between 175MHz and 190MHz is not limited to a range having 175MHz as a lower limit and 190MHz as an upper limit. For example, the frequency range may be any range that falls between 175 MHz and 190 MHz (for example, 175 MHz to 180 MHz, 176 MHz to 188 MHz, 180 MHz to 190 MHz, etc.). In some examples, the resonant frequency of the SAW sensor element 302 is within the frequency range when the temperature of the SAW sensor element 302 is within a predetermined temperature range (for example, 24°C to 1000°C).

In examples, there is provided a brake disc for an aircraft wheel brake. The brake disc comprises a temperature sensing device comprising a surface acoustic wave (SAW) sensor element, further described later. The brake disc comprising the temperature sensing device may be any of the brake discs 202, for example. In the example of Figure 2, there is a temperature sensing device 300 attached to one of the stators, namely the first stator 210a, as schematically shown. The following description is in the context of the brake disc comprising the temperature sensing device being the first stator 210a.

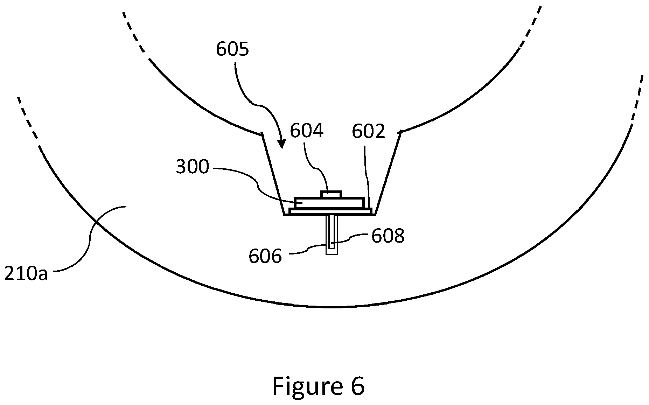

Figure 6 is a simplified schematic diagram illustrating an example of the first stator 210a comprising the temperature sensing device 300. It should be noted thatFigure 6 is a close-up of a part of the first stator 210a, and the dashed lines indicate that parts of the first stator 210a are not shown. In this example, the temperature sensing device 300 is attached to the first stator 210a by means of a ceramic adhesive 602 and one or more ceramic bolts 604.

In the example of Figure 6, the first stator 210 is shown as annular in form, having a hole through the centre to receive the torque tube 218. The first stator 210a includes a notch 605, which is recessed into an inner periphery of the stator and intended to receive a spline of the torque tube 218 of the wheel 104 when assembled as shown in Figure 2. The temperature sensing device 300 is attached to the first stator 210a in the notch 605, the notch 605 having a depth that is greater than the length of the spline, so that the spline and temperature sensing device 300 do not come into contact. However, the temperature sensing device 300 may be attached elsewhere on the first stator 210a, for example, on an outer periphery of the first stator 210a as illustrated in Figure 2.

The first stator 210a may comprise one or more threaded holes 606 for receiving the one or more ceramic bolts 604. The one or more ceramic bolts 604 comprise a threaded end 608 which has an external thread for engaging with an internal thread of the one or more threaded holes 606. For simplicity, the threads of the threaded end 608 and the threaded hole 606 are not shown in Figure 6. It will be appreciated that the one or more threaded holes 606 may be created in the first stator 210a using known techniques for drilling and tapping to create threaded holes.

The combination of using the ceramic adhesive 602 and the one or more ceramic bolts 604 provides for secure attachment of the temperature sensing device 300 to the first stator 210a. Those skilled in the art will appreciate that the environment of the brake discs 202 may be harsh due to vibration and/or physical shock during application of braking for example. The environment of the brake discs 202 may be harsh due to high temperatures reached by the brake discs 202, for example.

For example, the combination of the ceramic adhesive 602 and the one or more ceramic bolts 604 provides a means of attachment that can withstand the application of vibration, shock and/or high temperatures expected to occur during application of the brake 200.

The use of ceramic bolts as compared to for example, metallic bolts may be advantageous for attaching the temperature sensing device 300 to the first stator 210a. The temperature sensing device 300 may also comprise a ceramic material. As previously described, the brake discs 202 comprise carbon. For example, the thermal expansion coefficient of the carbon of the first stator 210a and the ceramic material of the temperature sensing device 300 may be different to that of high temperature metals which could be used in the bolts in question. On the other hand, ceramic bolts may have a similar thermal expansion coefficient to the temperature sensing device 300 and the first stator 210a. Accordingly, the use of ceramic bolts instead of metallic bolts may reduce the risk of damage due to thermal expansion. Metallic bolts, for example, may impact the radio frequency (RF) performance of the sensor antenna, for example by radiating or absorbing RF radiation. Advantageously, the bolts 604 being ceramic bolts does not impact on, for example, the radio frequency performance of the sensor antenna while still providing attachment using a fastener such as a bolt.

In some examples, the one or more ceramic bolts 604 are wet installed into the one or more threaded holes. Those skilled in the art will appreciate that bolts may be wet installed using a sealant and/or adhesive. Wet installation involves application of the sealant and/or adhesive (for example, to the bolt in question and/or the threaded hole) in an appropriate manner such that the sealant and/or adhesive seals and/or locks the thread of the ceramic bolt in question to the internal threaded of the relevant threaded hole.

In some examples, a sealant is used for the wet installation. Using sealant may form a fluid tight seal between the ceramic bolts 604 and the threaded holes 606. Sealing the ceramic bolts 604 in this manner inhibits penetration by moisture, water, oil or other fluids and/or contaminants, for example, to avoid adverse effects on the first stator 210a and/or adverse effects on how securely the temperature sensing device 300 is fixed to the first stator 210a.

Alternatively, or in addition to a sealant, an adhesive may be used for the wet installation. Using adhesive for the wet installation advantageously locks the respective threads of the ceramic bolts 604 and the threaded holes 606 together so that one is unlikely to move relative to the other. For example, locking the external and internal threads inhibits the ceramic bolts 604 from becoming loose, for example, on the application of vibration and/or physical shock.

In some examples, the one or more ceramic bolts are wet installed using ceramic adhesive. The ceramic adhesive may be used in conjunction with other material (for example, a sealant and/or another adhesive such as another ceramic adhesive) for the wet installation. The ceramic adhesive may withstand high temperatures likely to occur at the brake discs 202. Accordingly, use of the ceramic adhesive for the wet installation may provide for the temperature sensing device 300 to be attached to the first stator 210a in a manner that withstands high brake disc temperatures.

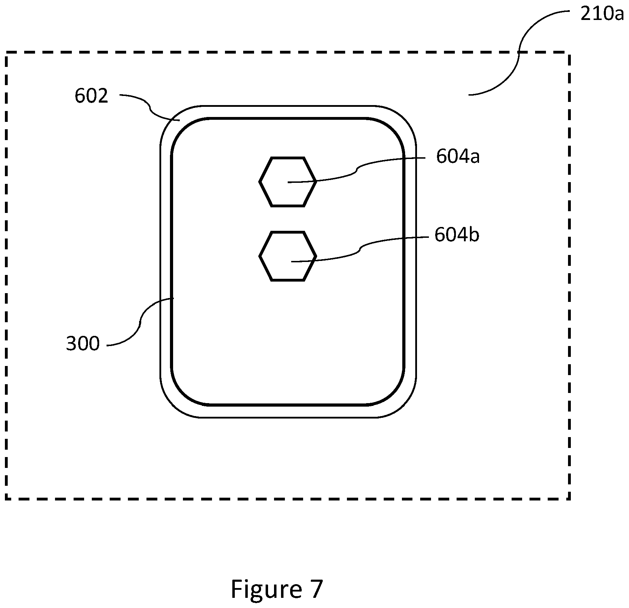

In some examples, the temperature sensing device is attached to the first stator 210a by means of the ceramic adhesive and two ceramic bolts. Figure 7 is a schematic plan view of the temperature sensing device 300 attached to a portion of the first stator 210a. The portion of the first stator 210a shown in Figure 7 is indicated in dashed lines, which indicates that only a part of a surface of the first stator 210a is schematically shown. In the example of Figure 7, the one or more ceramic bolts 604 comprise a first ceramic bolt 604a and a second ceramic bolt 604b.

The one or more ceramic bolts 604 may comprise Alumina (Aluminium Oxide $Al_2O_3$), for example. In some examples, the one or more ceramic bolts 604 comprise 99.8% Alumina. The one or more ceramic bolts 604 may have hexagonal heads. The one or more ceramic bolts 604 may have any kind of head which provides for them to be bolted into the one or more threaded holes 606. In some examples, the ceramic bolts have a size of 2-56. In some examples, the one or more ceramic bolts 604 have a length of about 2.5 centimetres. The features of the one or more ceramic bolts 604 may be chosen according to their use in attaching the temperature sensing device 300 to the first stator 210a, for example.

Temperature shock and vibration tests were conducted on the temperature sensing device 300 attached to a piece of carbon (for example, carbon corresponding to that used in the brake discs 202) by means of a ceramic adhesive and two ceramic bolts (99.8% Alumina, hexagonal head, size 2-56, and about 2.5 centimetres length) that were wet installed. A temperature test cycling between 300°C and 650°C (with a 4 hour hold time at the different temperature) showed the attachment of the temperature sensing device 300 to the carbon remain intact.

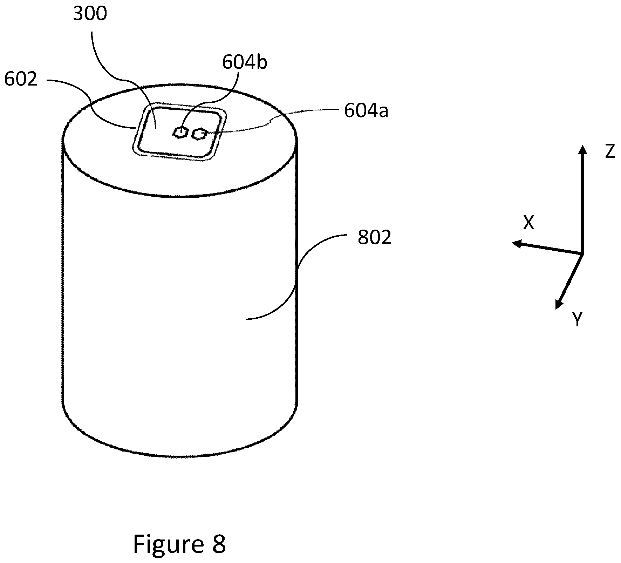

Various vibration and physical shock tests also showed the attachment of the temperature sending device 300 to the carbon to remain intact. Figure 8 is a simplified schematic perspective view of an example of the temperature sensing device 300 being attached to a carbon piece 802. Examples of physical shock tests include application of a first shock profile involving a sawtooth shock pulse lasting 20 milliseconds with 6g acceleration in the positive and negative x, y and z-directions as illustrated in Figure 8. Examples of physical shock tests also include application of a second shock profile involving a sawtooth shock pulse lasting 4 milliseconds with 50g acceleration in the positive and negative x, y and z-directions as illustrated in Figure 8. Examples of physical shock tests also include application of a third shock profile involving a shock pulse corresponding to half a sinusoid, lasting 4 milliseconds with 50g acceleration in the positive and negative x, y and z-directions as illustrated in Figure 8.

Examples of vibration tests include application of vibration at a 1 kHz frequency up to 50g acceleration in positive and negative x, y and z-directions as illustrated in Figure 5. Examples of vibration tests also include application of vibration at a 1 kHz frequency up to 50g acceleration in positive and negative x, y and z-directions as illustrated in Figure 5. Examples of vibration tests also include application of vibration at a 700 Hz frequency up to 50g acceleration in positive and negative x, y and z-directions as illustrated in Figure 5.

The described physical shock and vibration tests may be conducted at different temperatures, for example. For example, the vibration test may be performed at a temperature of 24°C, 350°C and 500°C. It will be appreciated that these are simply some specific examples of physical shock and vibration tests. The robustness of the attachment of the temperature sensing device 300 using a combination of ceramic adhesive and one or more ceramic bolts may be tested in various ways.

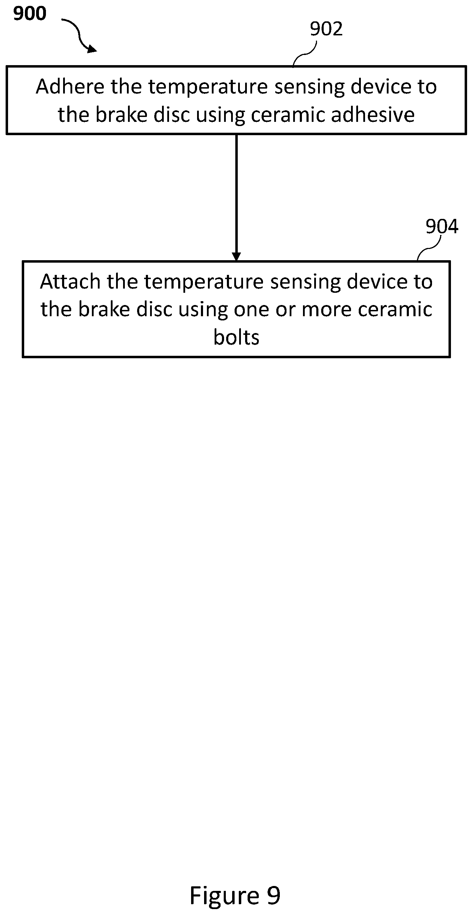

Figure 9 is a flow diagram illustrating a method 900 of attaching a temperature sensing device comprising a SAW sensor element and a sensor antenna, to a brake disc (for example, the first stator 210a) of an aircraft wheel brake (for example, the described brake 200). At block 902 of the method 900, the temperature sensing apparatus 300 is adhered to the brake disc using ceramic adhesive 602. At block 904 of the method 900, the temperature sensing device 300 is attached to the brake disc using one or more ceramic bolts 604. Blocks 902 and 904 may be performed in any order suitable for attaching the temperature sensing device 300 using the combination of ceramic adhesive 602 and one or more ceramic bolts 604. In some examples, blocks 602 and 604 are performed at the same time.

For example, the temperature sensing device 300 may be positioned on the first stator 210a where it is to be attached with a layer of uncured ceramic adhesive 602 between the temperature sensing device 300 and the first stator 210a. One or more ceramic bolts 604 may then be employed before the ceramic adhesive 602 is cured. For example, the one or more ceramic bolts 604 may be used to fix the temperature sensing device 300 to the first stator 210a while the ceramic adhesive 602 cures. Accordingly, using the combination of the ceramic adhesive 602 and the one or more ceramic bolts 604 may advantageously make attachment easier. For example, further actions may not be required to hold the temperature sensing device 300 in position while the ceramic adhesive 602 cures because the one or more ceramic bolts 604 hold the temperature sensing device 300 in position while the ceramic adhesive 602 cures. Those skilled in the art will appreciate the various methods of attaching components using adhesive and the various method of using fasteners such as ceramic bolts 604 for attachment. In some examples, the ceramic adhesive 602 is an Alumina based adhesive.

In some examples, the first stator 210a may comprise the first formation and the ceramic adhesive may be applied to provide the described first formation when cured.

Block 904 may comprise wet installing the one or more ceramic bolts 604. Wet installation may involve the use of a sealant and/or adhesive. Sealant and/or adhesives for installation of components in harsh environments on an aircraft may be used. As previously described, wet installation involves application of the sealant and/or adhesive (for example, to the bolt in question and/or the threaded hole) in an appropriate manner such that the sealant and/or adhesive seals and/or locks the thread of the ceramic bolt in question to the internal threaded of the relevant threaded hole. Block 904 may involve the application of sealant and/or adhesive to an appropriate part of the bolts 604 and/or the threaded holes into which said bolts 604 are to be installed.

A sealant may be used for the wet installation to form a fluid tight seal between the ceramic bolts 604 and the threaded holes 606, for example. Alternatively, or in addition to a sealant, an adhesive may be used for the wet installation in order to lock the respective threads of the ceramic bolts 604 and the threaded holes 606 together, for example, so that one is unlikely to move relative to the other. In some examples, the one or more ceramic bolts are wet installed using ceramic adhesive, which provides the previously described advantages. In some examples, the ceramic adhesive used in the wet installation is an Alumina based adhesive. In some examples of the method 900, block 904 involves attaching the temperature sensing device 300 to the first stator 210a using two ceramic bolts.

Certain components are described as being electrically coupled to other components. In some examples, components may be electrically coupled by virtue of an electrical connection. Those skilled in the art will appreciate that electronic components may also be capacitively or inductively coupled, for example. The type of electrical coupling depends on the characteristics of the electronic components and the particular application.

It should be noted that the Figures show simplified schematic views for the purpose of illustration. The Figures are intended to illustrate the described concepts and are not intended to convey dimensions, relative sizes of components and the like. In some cases, certain components are not shown for simplicity, as will be appreciated by those skilled in the art.

Although the invention has been described above with reference to one or more preferred examples, it will be appreciated that various changes or modifications may be made without departing from the scope of the invention as defined in the appended claims.

**Claims**

1. A brake disc for an aircraft wheel brake comprising:
   a temperature sensing device comprising a surface acoustic wave, SAW, sensor element and a sensor antenna, wherein:
   the temperature sensing device is attached to the brake disc by means of a ceramic adhesive and one or more ceramic bolts.

2. The brake disc according to claim 1 comprising:
   respective one or more threaded holes for receiving the one or more ceramic bolts.

3. The brake disc according to claim 2, wherein:
   the one or more ceramic bolts are wet installed into the one or more threaded holes.

4. The brake disc according to claim 3, wherein:
   the one or more ceramic bolts are wet installed using the ceramic adhesive.

5. The brake disc according to any one of the preceding claims, wherein:
   the temperature sensing device is attached to the brake disc by means of the ceramic adhesive and two ceramic bolts.

**6.** The brake disc according to any one of the preceding claims, wherein:
the temperature sensing device comprises one or more through holes for receiving the one or more ceramic bolts.

**7.** A method of attaching a temperature sensing device comprising a surface acoustic wave, SAW, sensor element and a sensor antenna, to a brake disc of an aircraft wheel brake, the method comprising:

adhering the temperature sensing device to the brake disc using ceramic adhesive; and
attaching the temperature sensing device to the brake disc using one or more ceramic bolts.

**8.** The method according to claim 7, wherein attaching the temperature sensing device to the brake disc using one or more ceramic bolts comprises:
wet installation of the one or more ceramic bolts.

**9.** The method according to claim 8, wherein:
the one or more ceramic bolts are wet installed using the ceramic adhesive.

**10.** The method according to any one of claims 7 to 9, wherein the method comprises:
attaching the temperature sensing device to the brake disc using two ceramic bolts.

**11.** An aircraft comprising the brake disc according to any one of claims 1 to 6.

Figure 1

Figure 2

EP 4 186 763 A1

Figure 3

300

302

304

302

406

402a

404a

402

404

Figure 4

500

300

304

302

504

502

508

506

510

EP 4 186 763 A1

Figure 5

Figure 6

Figure 7

EP 4 186 763 A1

300

604b

602

604a

Z

X

Y

802

Figure 8

**900**

902

```
Adhere the temperature sensing device to
the brake disc using ceramic adhesive
```

904

```
Attach the temperature sensing device to
the brake disc using one or more ceramic
bolts
```

Figure 9

**EP 4 186 763 A1**

Europäisches
Patentamt
European
Patent Office
Office européen
des brevets

# EUROPEAN SEARCH REPORT

**Application Number**

EP 22 21 0145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 789 744 A1 (AIRBUS OPERATIONS LTD [GB]; AIRBUS OPERATIONS SAS [FR]) 10 March 2021 (2021-03-10) * paragraph [0001] – paragraph [0069]; figures 1,2a,3a,4,5,7,8,11,12 * ----- | 1-11 | INV. B60T17/22 F16D55/36 G01K11/26 |
| Y | WO 2018/030942 A1 (STRAIN LABS AB [SE]) 15 February 2018 (2018-02-15) * paragraph [0001] – paragraph [0143]; figures 1,2 * ----- | 1-11 | ADD. F16D66/00 |

TECHNICAL FIELDS SEARCHED (IPC)

B60T
F16D
G01W
G01K
B64C

The present search report has been drawn up for all claims

| Place of search | Date of completion of the search | Examiner |
|---|---|---|
| Munich | 24 April 2023 | Kyriakides, D |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

21

## ANNEX TO THE EUROPEAN SEARCH REPORT
## ON EUROPEAN PATENT APPLICATION NO.

**EP 22 21 0145**

This annex lists the patent family members relating to the patent documents cited in the above-mentioned European search report.
The members are as contained in the European Patent Office EDP file on
The European Patent Office is in no way liable for these particulars which are merely given for the purpose of information.

**24-04-2023**

| Patent document cited in search report | | Publication date | Patent family member(s) | | Publication date |
|---|---|---|---|---|---|
| EP 3789744 | A1 | 10-03-2021 | EP | 3255399 A2 | 13-12-2017 |
| | | | EP | 3789744 A1 | 10-03-2021 |
| | | | GB | 2550364 A | 22-11-2017 |
| | | | US | 2017363482 A1 | 21-12-2017 |
| | | | US | 2020158580 A1 | 21-05-2020 |
| WO 2018030942 | A1 | 15-02-2018 | CN | 109563866 A | 02-04-2019 |
| | | | DK | 3497342 T3 | 19-04-2022 |
| | | | EP | 3497342 A1 | 19-06-2019 |
| | | | ES | 2913150 T3 | 31-05-2022 |
| | | | SE | 1630186 A1 | 09-02-2018 |
| | | | US | 2019271349 A1 | 05-09-2019 |
| | | | WO | 2018030942 A1 | 15-02-2018 |

EPO FORM P0459

For more details about this annex : see Official Journal of the European Patent Office, No. 12/82